# EUROPEAN PATENT SPECIFICATION

(11) **EP 0 758 028 B1**
(45) Date of publication and mention of the grant of the patent: **11.09.2002**
(21) Application number: 96111021.0
(22) Date of filing: 09.07.1996
(51) Int. Cl.: D01F 9/127

(54) **Process of producing graphite fiber**
Verfahren zur Herstellung von Graphitfasern
Méthode pour produire des fibres de graphite

(30) Priority: 10.07.1995 JP 21016195; 15.02.1996 JP 2808796
(43) Date of publication of application: 12.02.1997
(73) Proprietor: RESEARCH DEVELOPMENT CORPORATION OF JAPAN, Kawaguchi-shi, Saitama-ken (JP)
(72) Inventor: Kikuchi, Rie, Yamato-shi, Kanagawa-ken (JP); Yudasaka, Masako, Kawasaki-shi, Kanagawa-ken (JP); Ohki, Yoshimasa, Kanagawa-ken (JP)
(74) Representative: Weisert, Annekäte, Dipl.-Ing. Dr.-Ing.

(56) References cited:
- EP-A- 0 175 459
- US-A- 5 271 917
- JOURNAL OF CRYSTAL GROWTH, vol. 73, 1985, ELSEVIER SCIENCE PUBLISHERS B.V., AMSTERDAM, NL, pages 431-438, XP002058392 G.G. TIBBETTS: "Lengths of carbon fibers grown from iron catalyst particles in natural gas"
- CARBON, vol. 26, no. 4, 1988, OXFORD, GB, pages 425-432, XP002058393 F. BENISSAD ET AL: "Formation de fibres de carbone a partir du methane"; II: "Germination du carbone et fusion des particules catalytiques"

## Description

This invention relates to a process of producing fine graphite fiber and intended particularly for the process of precipitating graphite fiber selectively at the necessary position.

EP-A-175 459 discloses a process for the manufacture of graphite fibers, which are grown on a suitable nucleated ceramic surface by gas pyrolysis, wherein the growing surface is pretreated by evaporating ferric nitrate solution to deposit an iron compound and long cylindrical carbon filaments are produced. However, this process is disadvantageous because flowing hydrogen-base gas is used which is dangerous, and the such produced carbon fibers are different from the so-called "carbon nano-tubes" mentioned below.

Very fine cylindrical graphite fiber having 10^{- 9} m around diameter which is generally called carbon nano-tube, is characterised having a feature- of wound sheets of graphite nets like a concentric column. Therefore, regarding a feature of electric conductivity, the graphite fiber is predicted to have an broadly extended feature from that of metal to that of semi-conductor which is originated in the minute structural difference of it, and accordingly the newly developed applications are expected.

Following two techniques are well-known conventional method for producing of graphite fiber. That is, a producing process by heat treating with high temperature the fibrous product prepared by spinning an organic compound, and a process to make fibrous product grow by means of chemical vapor deposition method by using iron catalyst. Further, recently, a process to generate fibers by arc discharge method using carbon electrode is reported. However, the heat treating method of spun organic compound fibrous is difficult to control the structure of carbon material and so it is difficult to obtain a product having good crystalization. On the other hand, referring to the process which uses iron catalyst, it is reported that the fiber having a structure characterised the surface of graphite crystal is wound as to form a concentric column can be obtained by this process.

Consequently, among the conventional producing process of the graphite fiber, a process using iron catalyst and a process using arc discharge can be selected as the producing process of so called graphite nano-tube having the structure characterised having a feature of wound sheets of graphite crystal nets like a concentric column. The process using iron catalyst is explained as follows. That is, vapor of source material which includes iron e.g. ferrocene is used as the raw material, generate fine iron particles by chemical vapor deposition, and produce the graphite fiber by using them as the iron catalyst in a reacting vessel. This process must be carried out in the temperature of higher than 1000°C to generate graphite fibers. The graphite fibers generates at any space and on any surface of wall of the reacting vessel, and it is difficult to limit the location on which graphite fiber is generated to the necessary region. In the case of the process by using arc discharge method, graphite fiber is generated on cathode alone like a lump. It is necessary to use a special apparatus for arc discharge, and even if by using this process it is difficult to generate fiber on desired position.

Tibbetts has reported that carbon fibers produced by pyrolysis of hydrocarbons require submicron-sized metallic particles which act as catalytic nuclei for fiber growth (Journal of Crystal Growth 73 (1985) 431-438). He has investigated the carbon fiber length distributions produced by particles from five different types of iron-containing catalyst materials. The average particle diameters among these five materials ranged from 12 to 71 nm. Under the lengthening conditions selected for this experiment (6.25% natural gas at 1054°C for 30 min), the distribution of fiber lengths obtained from each catalyst were statistically indistinguishable.

The inventors have conducted intensive study to generate graphite fiber on desired position, and consequently accomplished the present invention. Namely, the object of this invention is to provide the process of producing graphite fibers having an accuracy preciser than submicron at desired position on a substrate.

This invention is based on the process of producing graphite fiber by means of chemical vapor deposition method, and the important point of this invention is characterized to use a less reactive substance as a substrate and previously to stick a small amount of carbon or metal at the desired position of a substrate.

As above mentioned, a small amount of carbon or metal is previously accumulated partially on the surface of less. reactive substrate, then a chemical vapor deposition method is applied, and the generation of graphite fiber can be observed at the area on which carbon or metal is previously accumulated. On the other hand, nothing is generated at the bared surface. Thus, by the present invention, it is easy to generate the graphite fiber at the desired area of the substrate. Further, the following method can be mentioned as the one application of this invention. For example, the surface of carbon or metal is coated by thin film of less reactive substance and the film is partially removed as to the base layer be exposed, then the graphite fiber can be generated only at the exposed portion. And if the substance of base layer is an electric conductive one, the generated graphite fiber can be said to be electrically connected.

The object and advantages of the present invention will become clear from the following description with reference to the accompanying drawings, wherein :
[Figure 1] Schematic illustration of the process of producing graphite fibers of this invention.
[Figure 2] Sectional view of apparatus for producing carbon nano-tube of this invention used in Example 1 and Example 4.
[Figure 3] Raman scattering spectrum of substance obtained by Example 1 of this invention.
[Figure 4] SEM picture of carbon nano-tube obtained by Example 1 of this invention.
[Figure 5] Sectional view of apparatus for producing carbon nano-tube of this invention used in Example 2 and Example 5.
[Figure 6] Schematic illustration showing the construction of substrate used in Example 9 of this invention (a), and showing the generation of graphite fiber on said substrate (b).
[Figure 7] Schematic illustration showing the construction of substrate used in Example 10 of this invention (a), and showing the generation of graphite fiber on said substrate (b).

The present invention is disclosed in detail as follows.

With respect to the present invention, the process of producing graphite fiber by using the chemical vapor deposition (hereafter CVD) method refers the thermal decomposition·polymerization reaction of vaporized materials, and generates graphite fiber on the substrate by said reaction. Cobalt, nickel, iron and these alloy are used as metal which acts as the catalyst. In this invention, the following compounds can be used as the raw material. That is, the organic compound having an adequate vapor pressure for CVD, or the metal-organic compound including said metals which act as catalyst can be used. Concretely, organic compounds not including metal such as orthomethyldiallylketone family or it's derivatives, phthalocyanine compounds and metallocene compounds which includes metal catalyst can be preferably mentioned, however the scope of this invention is not intended to be limited to them. The said less reactive substance which can be used as the substrate in this invention is the substance which does not participate in CVD reaction of this invention and also does not react with metal at reacting temperature, and concretely is quartz, alumina, oxidized silicon, or the like. And on the surface of said substrate carbon or metal is stuck, then the graphite fiber is generated at the said stuck point alone. In the expression of "carbon or metal" of this invention, the term of "metal" indicates a transition metal and preferably indicates a metal of iron or platinum family, and concretely cobalt, platinum or the like can be mentioned. It is not necessarily to agree the kind of metal included as a component in the raw material organic metal compound with the kind of metal stuck on the surface of substrate.

In this invention, the graphite fiber is produced on the substrate on which carbon or metal is stuck by using vacuum evaporation or CVD method. Although the heat treatment temperature is different by the vapor pressure of raw material, for instance is about from 50°C to 400°C. And, the substrate must be heated, but the necessary temperature is different by the kind of raw material and generally is concentrated about within the range from 600°C to 1000°C. And especially preferred within the range from 700°C to 850°C. Desirable atmosphere of the reacting space is in a condition of inert gas e.g. argon, nitrogen or the like and at a pressure of under latm. or the less, or in a vacuum condition.

At the surface area of substrate on which the generation of graphite fiber is intended, carbon or metal is previously stuck. As the method for sticking previously carbon or metal, following methods can be mentioned. That is, after preparing the layer of photo resist resin on the surface of substrate, necessary pattern is written by photo-lithographical technique, then heated, carbonized and carbon is stuck on the surface of substrate. Or, after metal layer is vaporized on the surface of substrate, and the obtained metal layer is processed to form the pattern of narrower lines than 1µm width, or dotted pattern or other necessary pattern by photo-lithographical technique. In the case of the metal thin layer, there is no limitation on thickness, however, in the case of carbon thin layer, the desirable thickness is thinner than 50nm. If the pattern is like a particle, in the case of carbon, the size is desirably smaller than 50nm in diameter.

Further, the following preparation method of the substrate can be mentioned. The thin layer of carbon or metal and the thin layer of less reactive substance is stacked mutually. And a part of outer surface layer made by less reactive substance is removed so as to partially expose the layer of carbon or metal. By using said substrate having stacked layer the following effect can be expected. That is, if the applied carbon or metal has electrical conductivity, since the graphite fiber is generated at the inner layer of carbon or metal, the generated graphite fiber is electrically connected.

In this invention, the case which uses nickel metal as the catalyst is disclosed in detail below. The use of fine particles of nickel as the metal catalyst, promises the possibility of producing graphite fiber without using organic metal compound as the raw materials and by mild reacting condition of 650°C to 800°C.

The important point of this invention is explained as follows. That is, in this invention, the process of producing graphite fibers is composed by using fine particles of nickel as a catalyst, using organic metal compound as a raw material and producing graphite fibers by means of CVD method, wherein characterised by generating graphite fibers on fine particles of nickel within the range of temperature between 650°C and 800°C. And, as the fine particles of nickel catalyst, it is desirable to use the fine particles of, nickel which is prepared in vacuum or in non-oxidation atmosphere by heat treating the thin film of nickel formed on the surface of substrate and by coalesing and granulating it on the substrate. And to carry out easily the coalescence and granulation of nickel,it is desirable to prefer the less nickel adhesive substance as the substrate.

Namely, in this invention, fine particles of nickel metal are used as the catalyst for producing graphite fibers, and the fine particles of nickel metal are used by being dispersed on the surface of substrate.

Furtheremore, when the metal-organic compound are used as the raw material, it is possible to produce the fibers which involve large amount of metal.

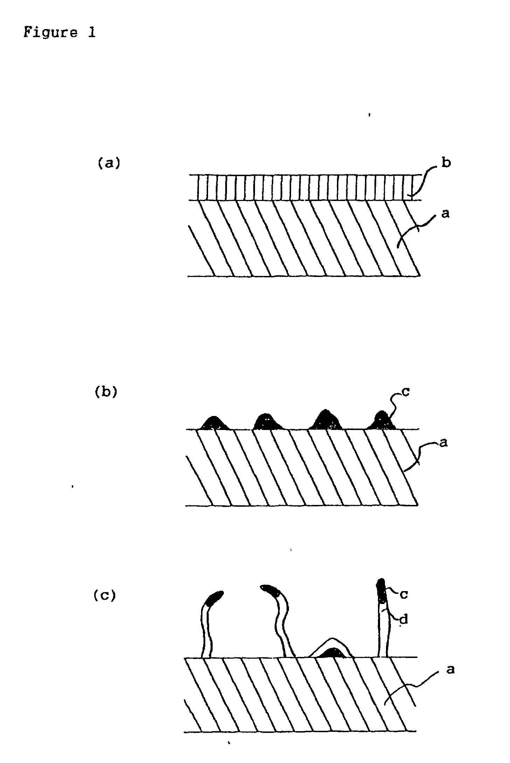

The process of producing graphite fiber of this invention is schematically illustrated with the accompanying drawing. In figure 1, nickel evaporated film "b" is prepared on the surface of substrate "a" (i), then is heated at the temperature of 700°C around. Since nickel is less adhesive with the substrate, the nickel evaporated film "b" is scattered as nickel fine particles "c" on the substrate (ii). The said fine particles of nickel "c" scattered on the substrate are used as the catalyst, and crystals of graphite are generated by means of CVD method. The crystals of graphite generated at the nickel fine particles "c" scattered position and the graphite fibers are produced (iii). Consequently, in this invention, it is possible to produce the graphite fiber at desirable position by the selective positioning of the nickel metal fine particles on the surface of substrate.

In this invention, it is necessary to disperse the nickel metal fine particles. To disperse the nickel metal fine particles, the substance which is less adhesive with nickel metal is preferred as the substrate and nickel film is prepared on the surface of said substrate. Since the condensing force of nickel itself is stronger than the adhesive force of nickel with the substrate, when it is heat treated nickel is granulated and dispersed over the surface of substrate. In this invention, it is desirable to use above mentioned nickel metal fine particles. As the substrate which has above mentioned feature, e.g. an oxide such as quartz glass or fluoride such as calcium fluoride can be mentioned.

In this invention, the said substrate is used, and the nickel evaporated film is prepared over the surface of the substrate, and the nickel metal fine particles are dispersed on the substrate. If the thickness of evaporated film is too thick, nickel is not granulated by the heat treatment and maintain the state of continuous film. Therefore, the thickness of nickel evaporated film is preferably between 1 and 20nm, and more suitably is about 5nm. By heat treating the evaporated nickel thin film having said thickness for about 30-200minutes at the temperature of between 650°C and 800°C in vacuum or non-oxidation atmosphere, the state that the fine particles of nickel having diameter of 200nm around are scattered on the surface of substrate is performed.

In this invention, any kind of organic compound can be used as the source material of carbon. However, the following organic compound is illustrated as a preferable compound for the source material. That is, for instance aromatic ketone compound having a substituted group at ortho position of one aromatic ring disclosed in the specification of "Producing method of graphite thin film" (Japanese patent application 93/64946, filed on March 24, 1993, invented by the inventors) can be preferably mentioned. The said organic compound is concretely indicated by following formulas. 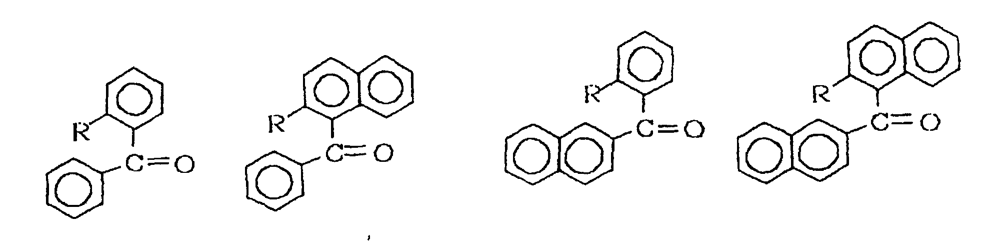 (herein R indicates alkyl group)

When said aromatic ketone compound having a substituted group at ortho position is used, the adequate region of the temperature to generate graphite fibers on a substrate is preferably between 650°C and 800°C. Since this temperature is almost same to the temperature that the nickel evaporated film on substrate is granulated, an apparatus and an operating method of this invention can be simplified. When the raw material for CVD method is thermally decomposed at the said temperature, graphite fibers are generated at the existing position of nickel on the surface of substrate. Nickel thin film exists on unnecessary position of substrate is predictively removed by using acid. And then by heat-treating it with adequate temperature, fine particles of nickel metal catalyst are scattered only on the necessary position of the substrate, and consequently graphite fiber generates at the position.

According to the above mentioned process of this invention, it become possible to control the diameter of particle of nickel metal by adjusting the thickness of evaporated film. Particle size of the nickel metal catalyst is the most important value for the generation of graphite fibers. Further, by using the fine particles of nickel as the catalyst the reacting temperature for generation of graphite fibers can ,be dropped to the low temperature between 650°C and 800°C. And simultaneously, since this temperature almost agrees with the temperature that the nickel evaporated film on substrate is granulated, an apparatus and an operating method of this invention can be simplified. Being nickel thin film used, it is possible to generate graphite fibers only on the necessary position of substrate, by removing the nickel thin film exists on unnecessary position and remaining that of necessary position for instance by means of photo-lithographic method. Otherwise, the method to remove fine particles existing on unnecessary position after nickel metal is granulated can be easily carried out.

By using carbon as a catalyst instead of metal, and by using organic metal compound in which the element of catalyst is included as a raw material, it is possible to generate the fibers selectively. The generated fiber by using above mentioned raw material includes many fine particles of the metal in the center.

The present invention will be understood more readily with reference to the following examples and to the accompanying drawings.

### EXAMPLE 1.

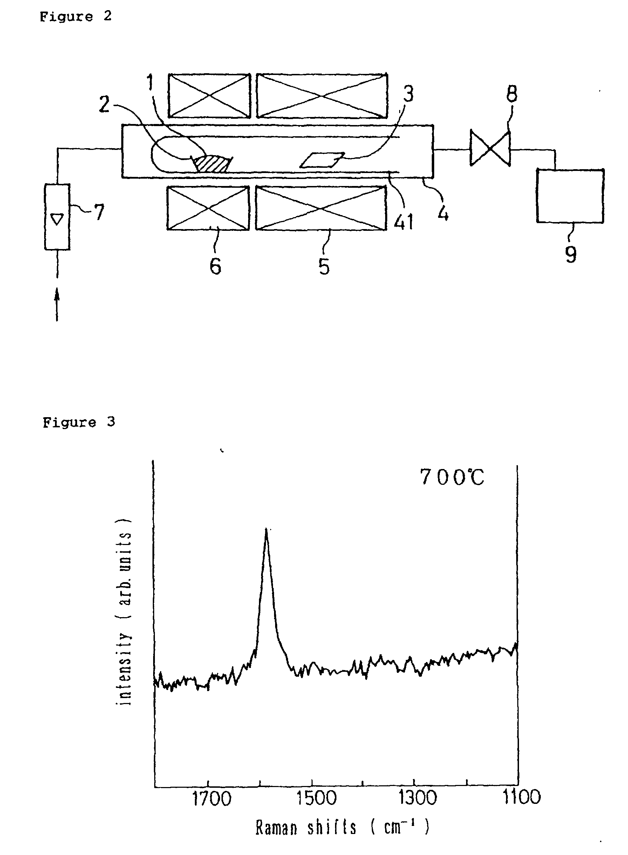

Figure 2 is a schematic view of an apparatus of producing graphite fiber of EXAMPLE 1 of this invention. In figure 2, a liner tube 41 is arranged in a reacting tube 4 made of quartz to prevent the sticking of precipitated substance generated by reaction on the inner surface of reacting tube. Said liner tube 41 must be changed to clean one by every reaction. Raw material 1 for CVD method is inserted into container 2 and set into liner tube, and the amount of vaporization is controlled by the temperature of the electric furnace 6. The temperature of substrate 3 set in the same liner tube 41 is controlled by the electric furnace 5.

In this EXAMPLE, 2-methyll,2'-naphthylketone indicated by following formula is used as the raw material.

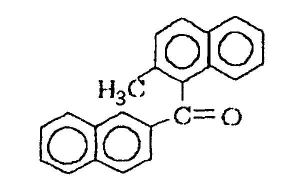

The substrate used in this Example is quartz glass, and nickel evaporated film of 5nm thickness is prepared on it. Highly purified argon gas can be supplied to the reacting tube trough flow controller 7. To the evacuating side of the reacting tube an evacuate equipment 9 is installed trough a valve 8 so as to control the pressure of reacting tube. The temperature of the part in which the raw material is placed,is fixed at 100°C. Said temperature is fixed for the purpose to evaporate the raw material at adequate pressure. And the temperature of the part in which the substrate is placed is fixed at 700°C. The nickel evaporated film on the surface of substrate can be granulated at said temperature. Highly purified argon gas is supplied by flow rate of 300cc/minutes and reacted for 3 hours at 1 atom. After the reaction, the generation of graphite fiber involving fine particles of nickel can be observed. The obtained specimen is measured by Raman scattering spectrum. According to the resulting chart of spectrum shown in figure 3, the obtained spectrum has an unique feature of crystalline graphite, and the generation of graphite substance is confirmed. Further,by the Scanning Electron Microscope (SEM) observation the generation of many fibrous substance is confirmed. The fibrous substance is observed by Transmission Electron Microscope (TEM), it is understood that the each fiber is hollow, partially involves fine particles of nickel and has a structure of winding like as a concentric column. Said structure is called as carbon nano-tube. So, hereafter the term of carbon nano-tube is used in this invention.

The reason why above mentioned reaction is occurred is investigated by the inventors, and it become clear that the evaporated nickel film is concentrated like small islands during the interval of temperature rising to the reacting temperature, and the concentrated fine particles of nickel become the catalyst of carbon nano-tube generation.

The temperature of the substrate arranged place, that is, the reacting temperature is varied from 300°C to 1000°C and the generation of carbon nano-tube is observed. It is found out that the adequate temperature for the generation of carbon nano-tube is limited within the range between 650°C to 800°C.

The experiments to reduce the pressure of reacting tube to the lower level than latm. are carried out, and it is recognized that the carbon nano-tube can be generated at the pressure of 0.01atm. as well as latm. condition.

### EXAMPLE 2.

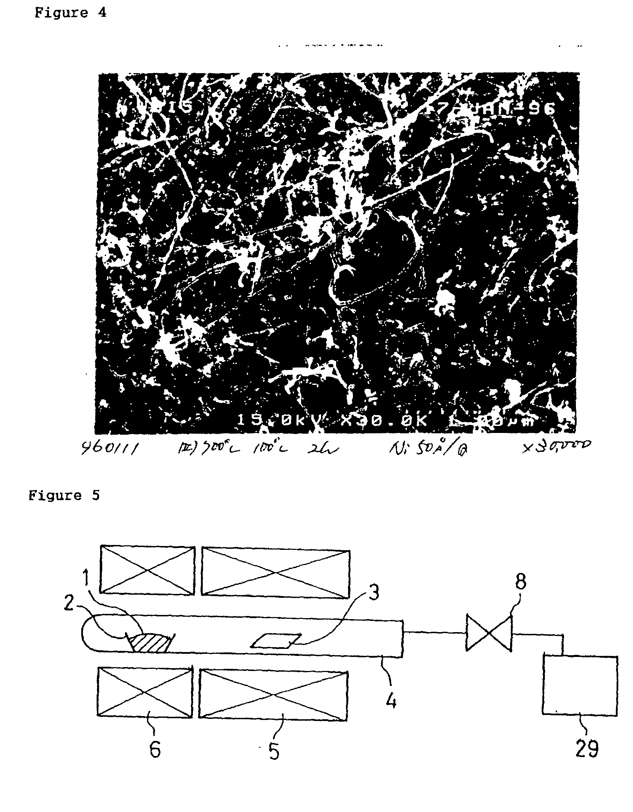

Example 2 is concretely illustrated with reference to figure 5.

Figure 5 is a schematic view of an apparatus used in Example 2. Quartz reacting tube 4 can be evacuated to the pressure level of 10⁻⁶ Pa by using evacuate line 29 with turbo molecular pump. Raw material 1 and substrate 3 is set in this quartz reacting tube. A kind of raw material is same to that of Example 1, and also the same substrate is used. After the raw material 1 and the substrate 3 are set, inside of reacting tube is evacuated to 10^{- 5} Pa by using evacuate line 29. Then, continuously evacuating, the temperature of substrate 3 is risen to 700°C and the temperature of raw material is risen to 100°C. Raw material is evaporated and reacted on substrate 3. Product by the reaction is precipitated at the low temperature part of reacting tube 4.The colour of precipitated product is white or light yellow. After the reaction, the temperature of electric furnace is cooled down and the substrate is checked. Same as to Example 1, the generation of carbon nano-tube is confirmed. The temperature of the place where the substrate is set, namely the reacting temperature is varied from 300°C to 1000°C, and it is found out that the adequate temperature to generate carbon nano-tube is limited within the range between 650°C and 800°C. Raw material 1 and substrate 3 can be heated to the intended temperature by using electric furnace like as to Example 1.

### EXAMPLE 3

Same apparatus to the Example 2 is used except using the substrate having patterned nickel evaporated thin film on the surface. That is, nickel thin film of 5nm is precipitated on the surface of quartz by means of vacuum evaporating method. This nickel thin film is processed to have striped pattern by using photo-lithographical technique. Said substrate is used, and the reaction is carried out according to the same condition and procedure to the Example 2. Carbon nano-tube is generated only at the area where the stripe patterned nickel thin film is remained, and nothing is generated at the area where the quartz is exposed.

### EXAMPLE 4

The process of producing graphite fiber is illustrated with reference to the above mentioned Figure 2. In Figure 2, reacting tube 4 is made of quartz, and liner tube 41 is arranged in reacting tube 4 to prevent the sticking of precipitated substance generated by the reaction. Liner tube 41 is changed to clean one at every reaction. Raw material 1 for CVD method is inserted into adequate container 2, and placed in liner tube.

In this Example, phthalocyaninecobalt is used as the raw material.

Reacting tube 4 is heated by electric furnace 6, and the vapor pressure of raw material 1 is controlled by electric furnace 5. The substrate 3 used in this Example is follows, that is, the quartz glass substrate on which 5nm of nickel thin film is prepared and striped pattern of narrower than 1µm width is formed by photo-lithographical technique. And to the reacting tube 4, highly purified argon gas is supplied through flow controller 7. To the evacuate side of reacting tube 4, the evacuating equipment 9 is installed through a valve 8 so as to control the pressure of reaction tube 4. The temperature of the portion where raw material 1 is placed is set up to 380°C. Said temperature is set up, for the purpose to evaporate the raw material 1 at adequate vapor pressure. The temperature of the part where the substrate is placed is set up to 850°C. Highly purified argon gas is supplied to the reacting tube at the flow rate of 300cc/minute and reacted for 1 hour at latm. After the reaction, the specimen of the product is inspected by microscope and the generation of graphite fiber having the diameter smaller than 1µm and the length longer than 50µm is observed along with the stripes of nickel. On the other hand, nothing is precipitated on the surface of exposed quartz.

Cobalt, iron and platinum are tested as the metal to form previously a pattern on quartz substrate and it is recognized that these metals are useful for the generation of graphite fibers. These fibers are investigated by a transmission electron microscope, and it is recognized that the graphite surface layer is wound like a concentric column and has a hollow structure involving partially fine particles of cobalt.

The temperature of the place where the substrate is set, namely the reacting temperature is varied from 300°C to 1000°C, and then the generation of carbon fiber nano-tube is investigated. The result shows that when the raw material is phthalocyaninecobalt the adequate generating temperature of carbon fiber nano-tube is higher than 700°C, desirably is higher than 800°C.

The experiments to reduce the pressure of reacting tube to the lower level than 1 atm. are carried out, and it is recognized that the carbon fiber nano-tube can be generated at the pressure of 0.01atm. as well as the condition of latm.

### EXAMPLE 5.

The apparatus shown in figure 5 is used. In figure 5, quartz reacting tube 24 can be evacuated to the pressure of 10⁻⁶ Pa by using the evacuate line 29 in which a turbo molecular pump is installed. Raw material 1 and substrate 3 is set in this quartz reacting tube. A kind of raw material is same as to that of used in Example 1, and also same substrate is used. After raw material 1 and substrate 3 is set, inside of reacting tube is evacuated to 10^{- 5} Pa by using evacuate line 29. Continuously evacuating, the temperature of substrate 3 is risen to 850°C and the temperature of raw material is risen to 380°C. Raw material is evaporated and reacted on substrate 3. Product by the reaction is precipitated at the low temperature part of reacting tube. The colour of precipitated product is blue. The reaction time is set up to 1 hour. After the reaction, the temperature of electric furnace is cooled down and the substrate is investigated. Same as to Example 4, the generation of carbon fiber nano-tube is confirmed. The temperature of the place where the substrate is set, namely the reacting temperature is varied from 300°C to 1000°C, and it is found out that the generating temperature of graphite fiber is higher than 700°C when phthalocyaninecobalt is used as the raw material. In the case of phthalocyaninenickel, graphite fiber is generated at the temperature of higher than 650°C.

### EXAMPLE 6.

Experiments by using same condition to the Example 5 except using a plate of alumina as a substrate instead of quartz are carried out. The generation of graphite fiber is observed at the striped pattern of metal like as Example 5.

### EXAMPLE 7.

Experiments by using same condition to the Example 5 except forming dotted pattern on substrate instead of forming striped pattern. By controlling the time for etching, patterns having from 2µm to 1nm size can be formed. Those patterns can be understood to have a characteristic of fine particles. Substrates having those patterns are used for the experiments to generate graphite fiber. On the bigger pattern, the generation of plural graphite fibers are observed, however, on the small pattern a single fiber is generated. And by this phenomenon, it is recognized that the pattern on quartz gives an opportunity of generation of fiber.

### EXAMPLE 8.

Quartz is used as a substrate, and photo resist resin (AZ-1400) is coated by 0.2µm thickness on the substrate, then the pattern of 1µm width is formed by using photo-lithographical technique. This resist pattern on quartz is heated and carbonized in argon gas flow at 700°C, and experiments to generate graphite fiber are carried out. And the generation of fiber is observed only on the carbonized resist. However, it is found out that the too thick resist layer prevent the growth of fiber. For the generation of good fiber is preferably performed on the resist of thinner thickness than 1nm. Fibers do not generate on the area where quartz is exposed.

### EXAMPLE 9.

As the another example of this invention, the substrate of a different construction is used.

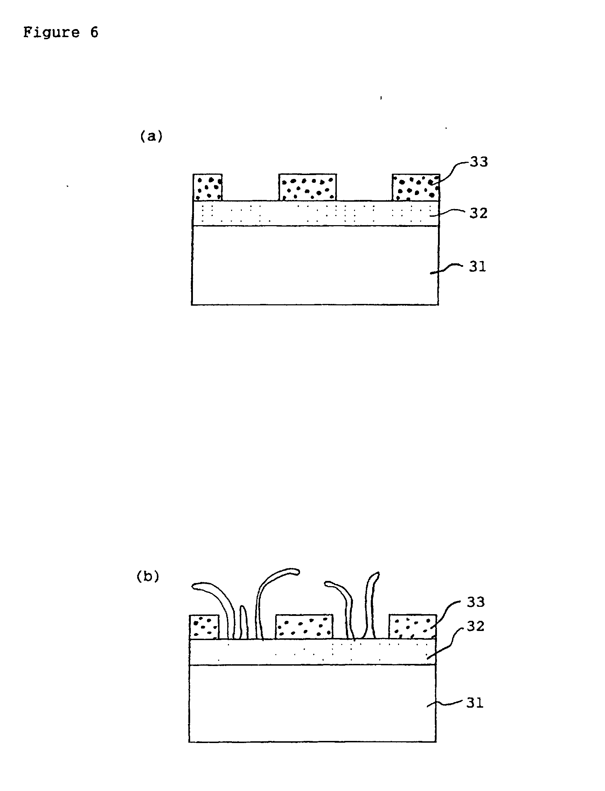

Figure 6(a) is a cross-sectional view illustrating the construction of substrate used in this Example. Cobalt metal layer of 250nm thickness is evaporated on a quartz plate 31, and on the said layer quartz layer 33 of 8nm is formed by using plasma CVD method. Quartz layer 33 is partially removed by photo-lithographical technique, and the inner cobalt layer 32 is exposed.

By using said substrate, experiments are carried out by using same process to Example 5, and the generation of graphite fiber is observed on the exposed cobalt surface. However, on the surface of quartz layer nothing is generated. This state is schematically illustrated in figure 6(b).

### EXAMPLE 10.

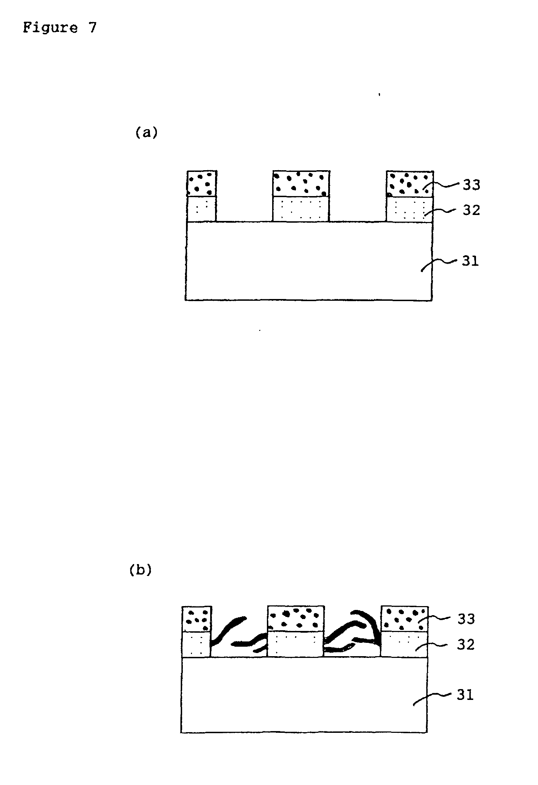

Figure 7 is a illustration of construction of different substrate. In figure 7, metal cobalt layer 32 of 250nm thickness is evaporated on quartz plate 31, and on this layer quartz layer of 80nm thickness is formed by plasma CVD technique. The quartz layer and the cobalt layer 32 are partially removed by photo-lithographical technique, and the bottom quartz plate surface is exposed. That is, the metal is exposed at the section of layer put between quartz layers.

By using said substrate, experiments are carried out by using same process to Example 5, and the generation of graphite fiber is observed on the exposed cobalt thin surface put between quartz layers. However, on the surface of quartz layer nothing is generated. This state is schematically illustrated in figure 7(b).

As above mentioned, this invention provides the process of producing graphite fiber locally, and by this process it is possible to control the position where fibers generate by submicron level precision.

## Claims

1. A process of producing graphite fiber, comprising a generation of the fiber by a chemical vapor deposition method using a metal-organic compound which includes catalyst metal selected from the group composed of Fe, Co, Ni and Pt as raw material, **characterized in** using a less reactive substance selected from the group composed of quartz, alumina and oxidized silicon as a substrate and previously sticking carbon or metal at a specific position where catalyst metal is adhered to the substrate surface.

2. The process of producing graphite fiber of claim 1, wherein the state of carbon or metal to be previously stuck to the substrate is thin film or fine particles.

3. The process of producing graphite fiber of claim 1, wherein the thickness of previously stuck carbon or metal is thinner than 50nm.

4. The process of producing graphite fiber of claim 1, wherein the metal to be previously stuck to the substrate is a same metal to that of included in the organic metal compound or different metal not form a stoichiometrically stabilized metal carbide compound.

5. The process of producing graphite fiber of claim 1, wherein the substrate is a laminated compound of carbon or metal layer previously stuck to the substrate and the layer of less reactive substance or the like compose the substrate, and the carbon or metal layer is exposed by partially removing the layer of less reactive substance of outer surface of this substrate.

6. The process of producing graphite fiber of claim 1, wherein the second layer of carbon or metal is partially removed with outer layer of less reactive substance.

7. The process of producing graphite fiber of claim 1, wherein the specific position on substrate surface is **characterized** having striped or dotted pattern.

8. The process of producing graphite fibers by chemical vapor deposition method comprising an use of fine particles of nickel, iron or cobalt as catalyst and an use of organic compound as raw material, **characterized** generating the fibers at the range of temperature between 650°C and 800°C.

9. The process of producing graphite fibers of claim 8, wherein the fine particles of nickel, iron or cobalt are formed by preparing thin film of said metals on the surface of substrate which has a feature of less adhesive with said metals, condensing and granulating it by heat treating in vacuum or non-oxidation atmosphere.

10. The process of producing graphite fibers of claim 8, wherein the fine particles of nickel, iron or cobalt are formed by preparing thin film of said metals only on the specific part of substrate and condensing and granulating it by heat treatment.

## Patentansprüche

1. Verfahren zur Herstellung von Graphitfaser, umfassend eine Bildung der Faser durch ein chemisches Dampfabscheidungsverfahren unter Verwendung einer metallorganischen Verbindung, die ein Katalysatormetall, ausgewählt aus der Gruppe, zusammengesetzt aus Fe, Co, Ni und Pt als Rohmaterial, umfasst, **dadurch gekennzeichnet, dass** eine weniger reaktive Substanz, ausgewählt aus der Gruppe, zusammengesetzt aus Quarz, Aluminiumoxid und oxidiertem Silicium, als Substrat verwendet wird, und dass zuvor Kohlenstoff oder Metall in einem spezifischen Teil, wo das Katalysatormetall an der Substratoberfläche haftet, befestigt wird bzw. festgeklebt wird.

2. Verfahren zur Herstellung von Graphitfaser nach Anspruch 1, wobei der Zustand des Kohlenstoffs oder des Metalls, der bzw. das zuvor auf das Substrat geklebt bzw. aufgebracht wurde, ein dünner Film oder feine Teilchen ist.

3. Verfahren zur Herstellung von Graphitfaser nach Anspruch 1, wobei die Dicke des zuvor aufgebrachten bzw. festgeklebten Kohlenstoffs oder Metalls dünner ist als 50 nm.

4. Verfahren zur Herstellung von Graphitfaser nach Anspruch 1, wobei das Metall, das zuvor auf das Substrat aufgebracht bzw. festgeklebt wurde, das gleiche Metall ist, das in der organischen Metallverbindung enthalten ist, oder ein unterschiedliches Metall ist, das keine stöchiometrisch stabilisierte Metallcarbidverbindung bildet.

5. Verfahren zur Herstellung von Graphitfaser nach Anspruch 1, wobei das Substrat eine laminierte Verbindung mit einer Kohlenstoff- oder Metall-Schicht ist, die zuvor auf das Substrat aufgebracht bzw. darauf festgeklebt wird, und wobei die Schicht aus weniger reaktiver Substanz oder ähnlichem das Substrat ergibt, und die Kohlenstoff- oder die Metall-Schicht freigelegt wird, indem die Schicht aus weniger reaktiver Substanz auf der Außenoberfläche des Substrats teilweise entfernt wird.

6. Verfahren zur Herstellung von Graphitfaser nach Anspruch 1, wobei die zweite Schicht aus Kohlenstoff oder Metall teilweise mit der Außenschicht aus weniger reaktiver Substanz entfernt wird.

7. Verfahren zur Herstellung von Graphitfaser nach Anspruch 1, wobei der spezifische Teil auf der Substratoberfläche dadurch charakterisiert ist, dass er ein Streifenoder Punktmuster besitzt.

8. Verfahren zur Herstellung von Graphitfasern gemäß einem chemischen Dampfabscheidungsverfahren, umfassend die Verwendung von feinen Teilchen aus Nickel, Eisen oder Kobalt als Katalysator, und die Verwendung einer organischen Verbindung als Rohmaterial, **dadurch gekennzeichnet, dass** die Fasern in einem Temperaturbereich zwischen 650°C und 800°C gebildet werden.

9. Verfahren zur Herstellung von Graphitfasern nach Anspruch 8, wobei die feinen Teilchen aus Nickel, Eisen oder Kobalt unter Herstellung eines dünnen Films dieser Metalle auf der Oberfläche des Substrats, die das Merkmal besitzt, dass sie gegenüber den Metallen weniger adhäsiv ist, Kondensation und Granulation durch Wärmebehandlung im Vakuum oder in einer nicht-oxidierenden Atmosphäre, gebildet werden.

10. Verfahren zur Herstellung von Graphitfasern nach Anspruch 8, wobei die feinen Teilchen aus Nickel, Kobalt oder Eisen unter Herstellung eines dünnen Films auf den Metallen nur auf dem spezifischen Teil des Substrats und Kondensation und Granulation durch Wärmebehandlung hergestellt werden.

## Revendications

1. Procédé consistant à produire des fibres de graphite, comprenant la génération des fibres par un procédé de dépôt de vapeur chimique utilisant un composé organo-métallique qui inclut un métal catalyseur choisi dans le groupe composé de Fe, Co, Ni et Pt comme matière première, **caractérisé par** l'utilisation d'une substance moins réactive choisie dans le groupe composé du quartz, de l'alumine et du silicium oxydé comme substrat, et par le collage en premier lieu de carbone ou de métal à un endroit spécifique où le métal catalyseur adhère à la surface du substrat.

2. Procédé consistant à produire des fibres de graphite selon la revendication 1, dans lequel le carbone ou le métal devant être en premier lieu collé au substrat est à l'état de film mince ou de fines particules.

3. Procédé consistant à produire des fibres de graphite selon la revendication 1, dans lequel l'épaisseur du carbone ou du métal collé en premier lieu est inférieure à 50 nm.

4. Procédé consistant à produire des fibres de graphite selon la revendication 1, dans lequel le métal devant être collé en premier lieu au substrat est un métal identique à celui qui est inclus dans le composé organo-métallique ou un métal différent ne formant pas un composé de carbure métallique stoechiométriquement stable.

5. Procédé consistant à produire des fibres de graphite selon la revendication 1, dans lequel le substrat est un composé de carbone laminé ou une couche de métal collée en premier lieu au substrat et la couche de substance moins réactive ou semblable constitue le substrat, et le carbone ou la couche de métal est exposé par l'enlèvement partiel de la couche de substance moins réactive de la surface extérieure de ce substrat.

6. Procédé consistant à produire des fibres de graphite selon la revendication 1, dans lequel la deuxième couche de carbone ou de métal est partiellement enlevée avec la couche extérieure de substance moins réactive.

7. Procédé consistant à produire des fibres de graphite selon la revendication 1, dans lequel l'emplacement spécifique sur la surface du substrat est **caractérisé en ce qu'**il a un motif rayé ou en pointillés.

8. Procédé consistant à produire des fibres de graphite par un procédé de dépôt de vapeur chimique, comprenant l'utilisation de fines particules de nickel, de fer, ou de cobalt comme catalyseur et l'utilisation d'un composé organique comme matière première, **caractérisé en ce que** la génération des fibres se produit à une température comprise entre 650°C et 800°C.

9. Procédé consistant à produire des fibres de graphite selon la revendication 8, dans lequel les fines particules de nickel, de fer ou de cobalt sont formées en préparant un film mince desdits métaux sur la surface du substrat qui a la particularité d'être moins adhésive avec lesdits métaux, sa condensation et sa granulation par un traitement thermique sous vide ou sous une atmosphère non-oxydante.

10. Procédé consistant à produire des fibres de graphite selon la revendication 8, dans lequel les fines particules de nickel, de fer ou de cobalt sont formées en préparant un film mince desdits métaux seulement sur la partie spécifique du substrat, et par sa condensation et sa granulation par traitement thermique.
